# EUROPEAN PATENT APPLICATION

(11) **EP 4 435 147 A1**
(43) Date of publication of application: **25.09.2024**
(21) Application number: 24153099.7
(22) Date of filing: 22.01.2024
(51) Int. Cl.: C25B 1/04, C25B 1/23, C25B 9/19, C25B 9/23, C25B 15/02

(54) **ELECTROLYSIS SYSTEM**

(30) Priority: 22.03.2023 JP 2023045762
(71) Applicant: Toshiba Energy Systems & Solutions Corporation, Saiwai-ku Kawasaki-shi Kanagawa (JP)
(72) Inventor: Matsuno, Takeshi, Kawasaki-shi, Kanagawa (JP)
(74) Representative: Hoffmann Eitle

(57) **Abstract**

An electrolysis system includes: an electrolysis unit that includes an electrolysis cell having a cathode, an anode, and a diaphragm therebetween, a gas supply device to supply a gas, an electrolytic solution supply device to supply an electrolytic solution, and a humidifying device generate a humidified gas; a power supply unit; and a control unit. The control unit is configured to control switching between: a power-on period in which starting to energize the electrolysis cell, respectively supplying the electrolytic solution and the humidified gas to the cathode and to the anode; and a power-off period in which stopping to energize the electrolysis cell but supplying the humidified gas to the cathode or to the cathode and the anode. The humidifying device is controlled so that an absolute humidity of the humidified gas in the power-off period is lower than that of the humidified gas in the power-on period.

## Description

### FIELD

Embodiments relate to an electrolysis system.

### BACKGROUND

In recent years, known examples of systems include an electrolysis system. The electrolysis system performs electrolysis through an oxidation reaction at an anode and a reduction reaction at a cathode. The electrolysis can be performed in supplying an electrolytic solution to the anode and supplying a gas to the cathode.

### BRIEF DESCRIPTION OF THE DRAWINGS

FIG. 1 is a schematic diagram illustrating a configuration example of an electrolysis system of a first embodiment.
FIG. 2 is an explanatory flowchart of an example of a method of operating the electrolysis system 1 in a power-on period.
FIG. 3 is an explanatory flowchart of an example of a method of operating the electrolysis system 1 in a power-off period.
FIG. 4 is an explanatory flowchart of an example of a method of operating an electrolysis system of a second embodiment.
FIG. 5 is a schematic diagram illustrating a configuration example of an electrolysis system of a third embodiment.
FIG. 6 is an explanatory flowchart of an example of a method of operating the electrolysis system of the third embodiment.
FIG. 7 is a schematic diagram illustrating a configuration example of an electrolysis system of a fourth embodiment.
FIG. 8 is a schematic diagram illustrating a configuration example of an electrolysis system 1 of a fifth embodiment.

### DETAILED DESCRIPTION

Embodiments will be hereinafter described with reference to the drawings. The relation of the thickness and planar dimension of constituent elements illustrated in the drawings, a thickness ratio among the constituent elements, and so on may be different from actual ones. The up-down direction may be different from the up-down direction according to the gravitational acceleration. Further, in the embodiments, substantially the same constituent elements are denoted by the same reference signs and a description thereof will be omitted when appropriate.

In this specification, "connecting" includes not only physically connecting but also electrically connecting, and includes not only directly connecting but also indirectly connecting unless specified.

An electrolysis system of an embodiment includes: an electrolysis unit that include: an electrolysis cell having a cathode, an anode, and a diaphragm between the cathode and the anode; a gas supply device configured to supply a gas containing carbon dioxide; an electrolytic solution supply device configured to supply an electrolytic solution; and a humidifying device configured to humidify the gas from the gas supply device to form a humidified gas; a power supply unit configured to control energizing each of the electrolysis cell, the gas supply device, the electrolytic solution supply device, and the humidifying device; and a control unit configured to control the electrolysis unit and the power supply unit, wherein the control unit is configured to control switching between: a power-on period in which starting to energize the electrolysis cell, supplying the electrolytic solution to the anode, and supplying the humidified gas to the cathode; and a power-off period in which stopping to energize the electrolysis cell but supplying the humidified gas to the cathode or to the cathode and the anode, and wherein the humidifying device is controlled so that an absolute humidity of the humidified gas in the power-off period is lower than an absolute humidity of the humidified gas in the power-on period.

### (First Embodiment)

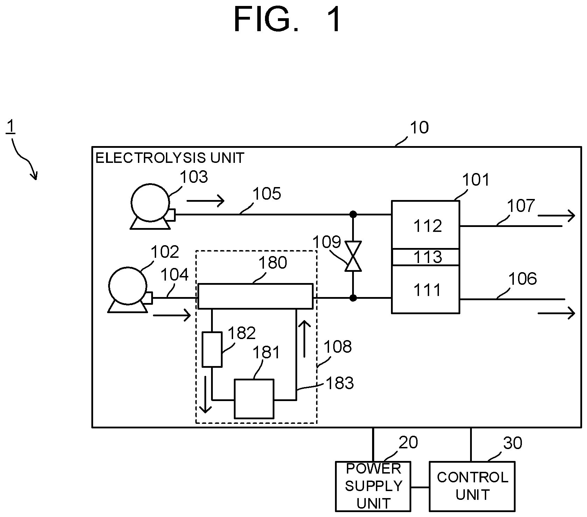

FIG. 1 is a schematic diagram illustrating a configuration example of an electrolysis system of a first embodiment. An electrolysis system 1 includes an electrolysis unit 10, a power supply unit 20, and a control unit 30.

The electrolysis unit 10 can perform electrolysis. The electrolysis unit 10 has an electrolysis cell 101, a gas supply device 102, an electrolytic solution supply device 103, a pipe 104, a pipe 105, a pipe 106, a pipe 107, a humidifying device 108, and a connection valve 109. FIG. 1 shows arrows that denote directions in which the corresponding fluids flow.

The electrolysis cell 101 has a cathode 111, an anode 112, and a diaphragm 113. The electrolysis unit 10 may have an electrolysis cell stack having a stack of a plurality of the electrolysis cells 101.

The cathode 111 has a cathode catalyst to reduce at least one of reducible materials (materials to be reduced) such as carbon dioxide to produce at least one of cathode products. Examples of the cathode products include a carbon compound such as carbon monoxide.

The anode 112 has an anode catalyst to oxidize at least one of oxidizable materials (materials to be oxidized) such as water to produce at least one of anode products. Examples of the anode products include oxygen.

The diaphragm 113 is provided between the cathode 111 and the anode 112. The diaphragm 113 separates the cathode 111 and the anode 112. The diaphragm 113 has, for example, a porous membrane. Examples of the porous membrane include a polyethersulfone (PES) filter membrane and an ion exchange membrane.

The gas supply device 102 can supply a gas. The gas contains carbon dioxide for example. The gas supply device 102 may have a gas cylinder that stores the gas and a pressure reducing valve that controls the pressure of the gas.

The electrolytic solution supply device 103 can supply an electrolytic solution. The electrolytic solution contains an ionic substance. The ionic substance is preferably at least one of a hydroxide ion (OH⁻), a hydrogen ion (H⁺), a potassium ion (K⁺), a lithium ion (Li⁺), and a hydrogen carbonate ion (HCO₃⁻), for instance. The electrolytic solution contains water. The electrolytic solution supply device 103 may have a pump. The electrolysis unit 10 may have a heater that heats the electrolytic solution.

The pipe 104 connects the gas supply device 102 and an inlet of the cathode 111.

The pipe 105 connects the electrolytic solution supply device 103 and an inlet of the anode 112. Since the ionic substance and the water in the electrolytic solution are consumed by an electrolysis reaction, a pipe to supply an electrolytic solution higher in concentration than the electrolytic solution from the electrolytic solution supply device 103 and a pipe to supply pure water may be connected to the pipe 105. The pipe to supply the higher-concentration electrolytic solution and the pipe to supply the pure water may be connected to the electrolytic solution supply device 103.

The pipe 106 is connected to an outlet of the cathode 111. The pipe 106 is configured to discharge out a cathode fluid to be discharged from the outlet of the cathode 111. The cathode fluid contains, for example, substances such as the carbon dioxide gas, steam, and the cathode product.

The pipe 107 is connected to an outlet of the anode 112. The pipe 107 is configured to discharge out an anode fluid to be discharged from the outlet of the anode 112. The anode fluid contains, for example, substances such as the electrolytic solution and the anode product.

The pipe 104, the pipe 105, the pipe 106, and the pipe 107 can be formed using a stainless steel material such as SUS304 or SUS316, for instance.

The humidifying device 108 can humidify the gas from the gas supply device 102 to form a humidified gas. The humidified gas preferably contains the same amount of steam as saturated steam of the gas. The humidifying device 108 is provided in the middle of the pipe 104. An example of the humidifying device 108 has a hollow-fiber membrane 180, a humidification water supply device 181, a temperature controller 182, and a pipe 183.

The hollow-fiber membrane 180 is provided in the middle of the pipe 104. For example, when the gas flows on the inner side of the hollow-fiber membrane 180 and humidification water flows on the outer side of the hollow-fiber membrane 180, it is possible to form a mixed gas of the saturated steam having substantially the same temperature as the temperature of the humidification water and the carbon dioxide-containing gas. The carbon dioxide-containing gas may be passed on the outer side of the hollow-fiber membrane 180 and the humidification water may be passed on the inner side of the hollow-fiber membrane 180 to form the mixed gas of the saturated steam having substantially the same temperature as the temperature of the humidification water and the gas containing the carbon dioxide.

The humidification water supply device 181 can supply the humidification water for humidifying the gas. The humidification water supply device 181 can supply the humidification water to an inlet on the outer side of the hollow-fiber membrane 181, for instance. The humidification water supply device 181 has, for example, a pump to control the supply of the humidification water.

The temperature controller 182 can control the temperature of the humidification water. The temperature controller 182 has, for example, an electric heater to heat the humidification water and a thermometer to measure the temperature of the humidification water.

The pipe 183 connects the inlet and an outlet on the outer side (humidification water supply side) of the hollow-fiber membrane 180, for instance. The pipe 183 can take on a role of a circulation channel for circulating the humidification water. The humidification water supply device 181 and the temperature controller 182 are provided in the middle of the pipe 183. The pipe 183 can be made with a stainless steel material such as SUS304 or SUS316, for instance.

The connection valve 109 can control connecting the pipe 104 and the pipe 105. The connection between the pipe 104 and the pipe 105 by the connection valve 109 can supply the humidified gas from the humidifying device 108 to the cathode 111 and the anode 112. The disconnection between the pipe 104 and the pipe 105 by the connection valve 109 can supply the humidified gas to the cathode 111 without supplying of the humidified gas to the anode 112 simultaneously. The connection valve 109 has a solenoid valve or a motor valve.

The power supply unit 20 is connected to the electrolysis unit 10. The power supply unit 20 can supply power to the electrolysis cell 101, the gas supply device 102, the electrolytic solution supply device 103, the humidifying device 108, and the connection valve 109, for example. The power supply unit 20 has at least one of power supply devices, for instance. The power supply unit 20 may have the power supply devices corresponding to the electrolysis cell 101, the gas supply device 102, the electrolytic solution supply device 103, the humidifying device 108, and the connection valve 109.

The control unit 30 is connected to the electrolysis unit 10 and the power supply unit 20. For example, the control of the power supply unit 20 by the control unit 30 can control the power supplies to the electrolysis cell 101, the gas supply device 102, the electrolytic solution supply device 103, the humidifying device 108, and the connection valve 109.

The control unit 30 may be constituted by hardware using a processor or the like, for instance. Another possible configuration is that its operations are saved as operating programs in a computer-readable recording medium such as a memory and when necessary, the hardware reads the operating programs stored in the recording medium to execute the operations.

Next, an example method of operating the electrolysis system 1 will be described. The example method includes operating in a power-on period (power-on time) in which supplying the power to the electrolysis cell 101 and operating in a power-off period (power-off time) in which stopping the power supply to the electrolysis cell 101. The power-on period is, for example, a period in which the electrolysis is performed. The power-off period is, for example, a period in which the electrolysis cell is halted. The power-on period and the power-off period can be switched by the control unit 30 controlling the electrolysis unit 10 and the power supply unit 20.

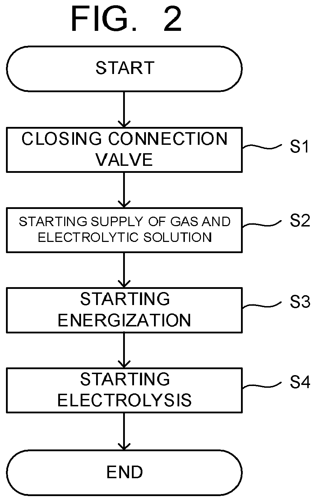

FIG. 2 is a flowchart for explaining an example operation of the electrolysis system 1 in the power-on period. FIG. 2 illustrates step S1, step S2, step S3, and step S4. Step S1 to step S4 are executed in order, for instance, but the order is not limited to this order.

In step S1, the control unit 30 controls the electrolysis unit 10 and the power supply unit 20 such that the connection valve 109 disconnects the pipe 104 and the pipe 105.

In step 2, the control unit 30 controls the electrolysis unit 10 and the power supply unit 20 such that the gas supply device 102 supplies the humidified gas to the cathode 111 through the humidifying device 108 and the electrolytic solution supply device 103 supplies the electrolytic solution to the anode 112.

In step S3, the control unit 30 controls the electrolysis unit 10 and the power supply unit 20 such that the power supply to the electrolysis cell 101 is started. Step S3 may be performed simultaneously with step S2.

In step S4, the control unit 30 controls the electrolysis unit 10 and the power supply unit 20 such that the electrolysis cell 101 performs the electrolysis. Here, the case where the electrolytic solution contains water and the carbon compound contains carbon monoxide will be described as an example.

The electrolysis cell 101 reduces carbon dioxide to produce carbon monoxide and oxidizes water to produce oxygen. Further, in some cases, it produces hydroxide ions through the reduction of the carbon dioxide. Near the cathode 111, water (H₂O) and carbon dioxide (CO₂) are reduced, resulting in the production of carbon monoxide (CO) and hydroxide ions (OH⁻) as represented by the following formula (1). The hydroxide ions diffuse to the vicinity of the anode 112 from the vicinity of the cathode 111. Near the anode 112, the hydroxide ions are oxidized, resulting in the production of oxygen (O₂) as represented by the following formula (2). The cathode fluid containing the carbon dioxide, the carbon monoxide, and the hydroxide ions is discharged from the cathode 111 through the pipe 106. The anode fluid containing the oxygen and the electrolytic solution is discharged through the pipe 107.

2CO₂ + 2H₂O + 4e⁻ → 2CO + 4OH⁻ ... (1)

4OH⁻ → 2H₂O + O₂ + 4e⁻ ... (2)

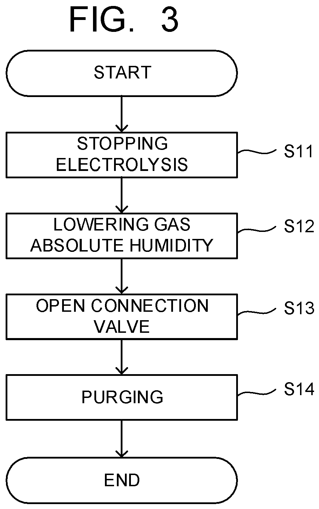

FIG. 3 is a flowchart for explaining an example operation of the electrolysis system 1 in the power-off period. FIG. 3 illustrates step S11, step S12, step S13, and step S14. Step S11 to step S14 are executed, for example, in order, but the order is not limited to this order.

In step S11, the control unit 30 controls the electrolysis unit 10 and the power supply unit 20 such that the power supply to the electrolysis cell 101 is stopped and the electrolysis is stopped. At this time, the supply of the humidified gas to the cathode 111 may be continued, and the supply of the electrolytic solution to the anode 112 may be continued. The connection valve 109 is kept closed to disconnect the pipe 104 and the pipe 105.

Step S12 includes controlling the electrolysis unit 10 and the power supply unit 20 by the control unit 30 such that the temperature of the humidification water becomes lower than the temperature of the humidification water in the power-on period. The temperature of the humidification water can be decreased by, for example, decreasing the output of the heater of the temperature controller 182. When the temperature of the humidification water decreases, the saturated steam reduces. Consequently, the absolute humidity of the humidified gas in the power-off period becomes lower than the absolute humidity of the humidified gas in the power-on period. The electrolysis unit 10 illustrated in FIG. 1 does not have a bypass pipe connected in parallel to the hollow-fiber membrane 180 and bypassing the hollow-fiber membrane 180 or a bypass shut-off valve controlling the opening/closing of the bypass pipe, but another possible configuration is that the bypass pipe and the shut-off valve are provided, the gas does not bypass the hollow-fiber membrane 180 in the power-on period, and in the power-off period, the gas bypasses the hollow-fiber membrane 180 to decrease in the absolute humidity. The connection valve 109 is kept closed to disconnect the pipe 104 and the pipe 105.

Step S13 includes controlling the electrolysis unit 10 and the power supply unit 20 by the control unit 30 such that the connection valve 109 is opened to connect the pipe 104 and the pipe 105.

Step S14 includes controlling the electrolysis unit 10 and the power supply unit 20 by the control unit 30 such that the humidified gas having the controlled absolute humidity is supplied to the cathode 111 through the pipe 104 and to the anode 112 through the pipe 105. The connection valve 109 is kept open to connect the pipe 104 and the pipe 105. This enables purging the electrolytic solution in the anode 112, for instance. Consequently, it is possible to reduce the deterioration of the anode 112 due to freezing, for instance.

When supplying the gas to the electrolysis cell 101 to perform the electrolysis, the gas may be humidified to enable a reduction in the precipitation of impurities to reduce catalytic performance degradation. Examples of a method of humidifying the gas include a method of passing the gas in water stored in a tank and heated by a heater to cause bubbling, and a method of passing the gas in a hollow-fiber membrane through which warm water flows, to humidify the gas.

The humidifying method by bubbling may cause flowing liquid drops downstream to clog the electrolysis cell 101. This prevent the electrolysis in the electrolysis cell 101. Examples of a method of reducing the liquid drops, include increasing the volume of the tank, reducing the flow velocity of the liquid drops and the gas, and dropping the liquid drops by gravity. However, the increase of the volume leads to a size increase of the humidifying device 108.

An example of the humidifying method using the hollow-fiber membrane passes the gas on the inner side of the hollow-fiber membrane in a straw shape and passes the water on its outer side to supply steam from the outer side to the inner side of the hollow-fiber membrane only by concentration diffusion, and thus can humidify the gas only in a compact space of the small-volume hollow-fiber membrane, without any occurrence of liquid drops. It is also possible to increase the gas temperature by making the temperature of the humidification water passed to the hollow-fiber membrane higher than the gas temperature. Similarly, it is also possible to decrease the gas temperature by making the temperature of the humidification water passed to the hollow-fiber membrane lower than the gas temperature. Similarly, in the bubbling, it is also possible to increase or decrease the gas temperature according to the temperature of the humidification water.

Impurities, if contained in the electrolytic solution or the humidification water, may cause the performance degradation of the electrolysis cell 101. The impurities are roughly classified into filterable particulate substances and ionic substances such as metallic ions that are not filterable and have to be adsorbed by an ion exchange resin. For example, the hollow-fiber membrane can filter the particulate substances but cannot adsorb the ionic substances.

When the impurities contained in the electrolytic solution or the humidification water precipitate inside the electrolysis cell 101 due to the drying of the electrolysis cell 101, the electrolysis cell 101 deteriorates to degrade in performance. Whichever of the impurities of the particulate substances or the ionic substances precipitate in the electrolysis cell 101, catalytic performance degrades and the porous membrane which is the diaphragm 113 of the electrolysis cell 101 hardens to crack and deteriorate. For example, if the hollow-fiber membrane 180 is not provided in the humidifying device 108, the particulate substances cannot be filtered to easily accumulate in the electrolysis cell 101, and the diaphragm 113 of the electrolysis cell 101 hardens to crack to easily deteriorate. Therefore, in the power-off period in which the electrolysis is not performed, it is also necessary to reduce the drying of the electrolysis cell 101 to reduce the precipitation of the impurities therein. Due to a dry-wet cycle where wetting and drying are repeated, the impurities precipitate, so that the diaphragm 113 is given stress to easily suffer deterioration such as tearing. In the case where a combustible gas is produced by the electrolysis by the electrolysis cell 101, purging with a noncombustible gas is done to prevent the combustible gas from accumulating and remaining in the electrolysis cell 101, and at this time as well, a wet gas is preferably used as the noncombustible gas for the purging to reduce the drying to reduce the precipitation of the impurities in the electrolysis cell 101.

In the case where the diaphragm 113 is the porous membrane, if the gas on the cathode 111 side is dry when the electrolytic solution is supplied to the anode 112, salt of the electrolytic solution precipitates to form impurities on the cathode 111 side to degrade the performance of the electrolysis cell 101 even if the cathode 111 side is kept at a high pressure to prevent the electrolytic solution from seeping out to the cathode 111 side.

In the case where the combustible gas is produced by the electrolysis, the purging with the noncombustible gas needs to be done to prevent the combustible gas from accumulating in the electrolysis cell during non-operation and storage. It is also necessary to humidify this noncombustible gas to prevent impurities from precipitating in the electrolysis cell.

Since the efficiency of the electrolysis improves at a temperature higher than the room temperature, the electrolysis cell 101 performs the electrolysis after the temperature of the electrolytic solution is increased to an appropriate temperature. The appropriate temperature is, for example, not lower than 40°C nor higher than 60°C. During the electrolysis, the electrolytic solution needs to be cooled using a cooler such as a cooling tower or a radiator because the temperature of the electrolytic solution becomes higher than the optimum temperature due to the heat generation of the electrolysis cell 101 accompanying the electrolysis. On the other hand, in the power-off period, the temperature of the electrolytic solution decreases to the room temperature or the outdoor temperature unless it is heated by a heater. Heating the electrolytic solution by the heater to increase the temperature of the electrolytic solution to the appropriate temperature even in the power-off period leads to a lower efficiency of the whole electrolysis system 1, and therefore, the output of the heater is lowered in the power-off period.

In the case where the humidified gas having a higher temperature than the temperature of the electrolysis cell 101 is supplied in the power-off period, the humidified gas condenses inside the electrolysis cell 101. The condensation of the humidified gas causes flooding to inhibit gas diffusion, resulting in lower electrolysis efficiency.

Here, making the absolute humidity of the humidified gas in the power-off period lower than the absolute humidity of the humidified gas in the power-on period makes it possible to reduce the condensation of the humidification water to reduce the electrolysis efficiency degradation. In the case where the electrolytic solution is heated, since heating the electrolytic solution to the appropriate temperature also in the power-off period lowers the efficiency of the whole electrolysis system, the output of the heater to heat the electrolytic solution may be lowered in the power-off period. In the first embodiment, the use of the hollow-fiber membrane 180 makes it possible to filter the particulate substances to reduce the accumulation of the particulate substances in the electrolysis cell 101. This can reduce deterioration such as cracking of the diaphragm 113 due to its hardening. Further, the humidifying device 108 using the hollow-fiber membrane 180 can be more compact than a humidifying device using the bubbling.

The electrolysis unit 10 may be structured such that the outlet of the anode 112 is connected to the electrolytic solution supply device 103 so that the electrolytic solution circulates from the outlet of the anode 112 to the electrolytic solution supply device 103. Further, the electrolytic solution supply device 103 may have a heater to heat the electrolytic solution by the heater to a temperature not lower than 40°C nor higher than 60°C which is the appropriate temperature of the electrolysis in the electrolysis cell 101. In this case, when the supply of the humidified gas to the cathode 111 is stopped in the power-off period, it is preferable to lower or stop the output of the heater to decrease the temperature of the electrolytic solution to an ambient temperature, thereby inhibiting the steam of the electrolytic solution that is to be supplied to the anode 112 from condensing in the cathode 111.

### (Second Embodiment)

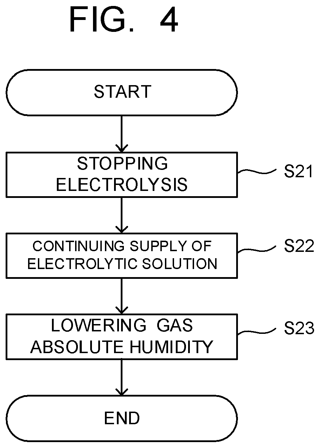

FIG. 4 is an explanatory flowchart of an example of a method of operating an electrolysis system of a second embodiment. The electrolysis system of the second embodiment is different from the electrolysis system of the first embodiment in that, in the power-off period, the supply of the electrolytic solution to the anode 112 is continued and the absolute humidity of the humidified gas is gradually (continuously) lowered. The following describes parts different from the first embodiment, and for the other parts, the description in the first embodiment can be referred to as required.

FIG. 4 illustrates step S21, step S22, and step S23. Step S21 to step S23 can be executed, for example, in order, but the order is not limited to this order.

Step S21 includes controlling the electrolysis unit 10 and the power supply unit 20 by the control unit 30 to stop energizing the electrolysis cell 101 to stop the electrolysis. The connection valve 109 is kept closed to disconnect the pipe 104 and the pipe 105.

Step S22 includes controlling the electrolysis unit 10 and the power supply unit 20 by the control unit 30 to continue the supply of the electrolytic solution from the electrolytic solution supply device 103. In this step, the supply of the humidified gas to the cathode 111 is continued. The temperature of the electrolytic solution decreases to the ambient temperature due to heat release unless a heater is provided and the output of the heater is controlled such that the electrolytic solution has a temperature higher than its temperature in the power-on period. The connection valve 109 is kept closed to disconnect the pipe 104 and the pipe 105.

Step S23 includes controlling the electrolysis unit 10 and the power supply unit 20 by the control unit 30 such that the temperature of the humidification water becomes lower than the temperature of the humidification water in the power-on period. In this step, the temperature controller 182 is controlled by the control unit 30 to gradually lower the output of the heater of the temperature controller 182 so that the temperature of the humidification water gradually decreases to the ambient temperature. This makes it possible to gradually lower the absolute humidity of the humidified gas to a humidity close to that of saturated steam at the ambient temperature. After the absolute humidity of the humidified gas is lowered to that of the saturated steam at the ambient temperature, the supply of the gas from the gas supply device 102 may be stopped. In the case where there is a risk that the electrolytic cell 101 may freeze due to a below-zero ambient temperature, the heater or the temperature controller 182 is preferably controlled such that the temperatures of the electrolytic solution and the humidification water do not decrease to, for example, 4°C or lower. That is, the temperatures of the electrolytic solution and the humidification water are preferably controlled to exceed 4°C.

Since the gas having too low a relative humidity dries the diaphragm 113 to deteriorate it, the gas needs to be humidified. The temperature of the electrolysis cell 101 when it stops the electrolysis which is an exothermic reaction gradually decreases to the ambient temperature due to heat release. To reduce the condensation of the humidified gas inside the electrolysis cell 101 in the power-off period, it is preferable to, for example, gradually decrease the temperature of the humidification water to gradually lower the absolute humidity of the humidified gas to a humidity close to that of the saturated steam at the ambient temperature and thereafter stop the supply of the humidified gas. Further, continuing the supply of the electrolytic solution to the anode 112 in the power-off period reduces the evaporation of moisture from the anode 112, making it possible to reduce the deterioration of the anode 112 due to drying.

### (Third Embodiment)

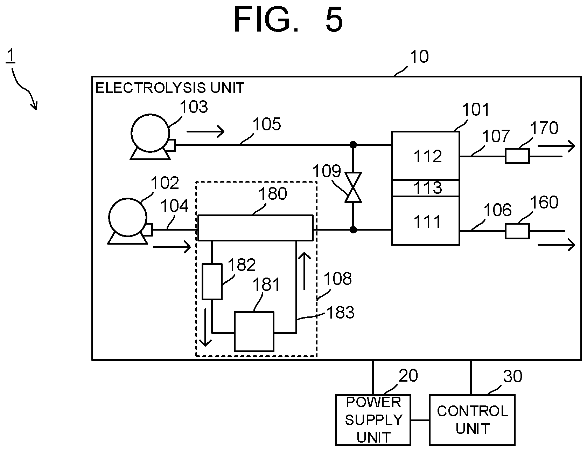

FIG. 5 is a schematic diagram illustrating a configuration example of an electrolysis system of a third embodiment. The electrolysis system 1 of the third embodiment is different from the electrolysis system 1 of the first embodiment in that it further has a thermometer 160 and a thermometer 170. The following describes parts different from the first embodiment, and for the other parts, the description in the first embodiment can be referred to as required.

The thermometer 160 can measure the temperature of the cathode fluid discharged from the outlet of the cathode 111. The thermometer 160 is connected to the outlet of the cathode 111. The thermometer 160 may be in the middle of the pipe 106, for instance.

The thermometer 170 can measure the temperature of the anode fluid discharged from the outlet of the anode 112. The thermometer 170 is connected to the outlet of the anode 112. The thermometer 170 may be in the middle of the pipe 107, for instance.

The thermometer 160 and the thermometer 170 each have, for example, a platinum resistance temperature sensor, a thermocouple, or a thermistor. For example, the thermometer 160 and the thermometer 170 may transmit data signals indicating the measured temperatures to the control unit 30. Consequently, the control unit 30 can generate control signals based on the data signals, and the humidifying device 108 can be controlled based on the control signals from the control unit 30 to adjust the temperature of the humidification water, for instance.

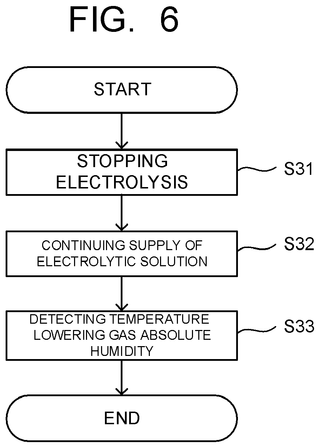

FIG. 6 is an explanatory flowchart of an example of a method of operating the electrolysis system of the third embodiment. FIG. 6 illustrates step S31, step S32, and step S33. Step S31 to step S33 can be executed, for example, in order, but the order is not limited to this order.

Step S31 includes controlling the power supply unit 20 by the control unit 30 to stop energizing the electrolysis cell 101 and stop the electrolysis. The connection valve 109 is kept closed to disconnect the pipe 104 and the pipe 105.

Step S32 includes controlling the electrolysis unit 10 and the power supply unit 20 by the control unit 30 to continue the supply of the electrolytic solution from the electrolytic solution supply device 103. In step S32, the supply of the humidified gas to the cathode 111 is continued. The temperature of the electrolytic solution decreases to the ambient temperature due to heat release unless a heater is provided and the output of the heater is controlled such that the electrolytic solution has a temperature higher than the temperature in the power-on period. The connection valve 109 is kept closed to disconnect the pipe 104 and the pipe 105.

Step S33 includes controlling the electrolysis unit 10 and the power supply unit 20 by the control unit 30 such that the temperature of the humidification water becomes lower than the temperature of the humidification water in the power-on period. In step S33, the humidification water having a higher temperature than the temperature measured by the thermometer 160 or the thermometer 170 is passed in the hollow-fiber membrane 180 to humidify the gas from the gas supply device 102. The temperature of the electrolysis cell 101 halting the electrolysis which is an exothermic reaction gradually decreases to the ambient temperature due to heat release. To reduce the condensation of the humidified gas inside the electrolysis cell 101 in the power-off period, it is preferable, as in the second embodiment, to gradually lower the temperature of the humidification water to gradually lower the absolute humidity of the humidified gas to a humidity close to that of saturated steam at the ambient temperature, and thereafter stop the supply of the humidified gas.

If the humidified gas having a higher temperature than the temperature of the electrolysis cell 101 is supplied, the humidified gas condenses inside the electrolysis cell 101. The condensation of the humidified gas causes flooding to inhibit gas diffusion, leading to lower electrolysis efficiency. To prevent lowering the electrolysis efficiency, it is preferable to measure the temperature of at least the cathode fluid or the anode fluid discharged from the electrolysis cell 101 to measure the temperature in the electrolysis cell 101 and control the temperature of the humidification water to a temperature higher than the measured temperature. If the temperature of the humidification water is not controlled by the humidification water temperature controller based on the temperature of the cathode fluid or the anode fluid, the humidified gas remaining in the electrolysis cell which has been purged (scavenged) by the humidified gas after stopping the electrolysis condenses to cause the flooding in the electrolysis cell 101, which may lower electrolysis efficiency when the electrolysis restarts.

The temperatures measured by the thermometer 160 and the thermometer 170 are greatly influenced by the internal temperature of the electrolysis cell 101 to be, for example, equal to the temperature of the electrolysis cell 101. Therefore, the humidification water having a higher temperature than the temperature measured by the thermometer 160 or the thermometer 170 is passed in the hollow-fiber membrane 180 to humidify the gas from the gas supply device 102 to moisten the inside of the electrolysis cell 101, making it possible to reduce the precipitation of salt due to drying. Further, continuing the supply of the electrolytic solution to the anode 112 in the power-off period reduces the evaporation of moisture from the anode 112 to reduce the deterioration of the anode 112 due to drying.

### (Fourth Embodiment)

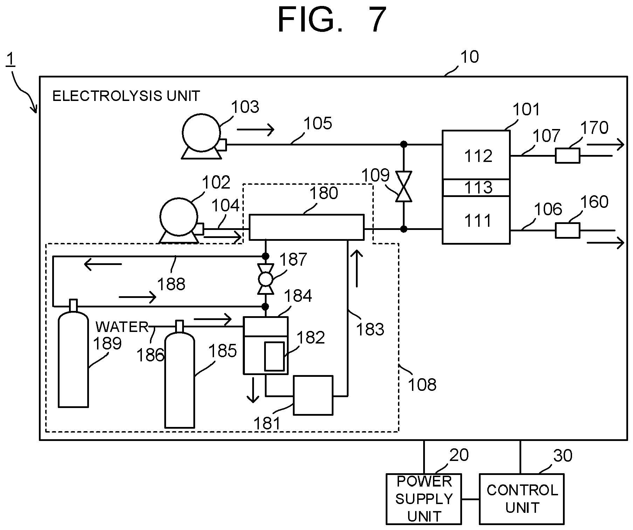

FIG. 7 is a schematic diagram illustrating a configuration example of an electrolysis system of a fourth embodiment. The electrolysis system 1 of the fourth embodiment is different from the electrolysis system 1 of the third embodiment in that the humidifying device 108 further has a tank 184, an ion exchange device 185, a pipe 186, a flow rate controller 187, a pipe 188, and an ion exchange device 189. The following describes parts different from the third embodiment, and for the other parts, the description in the third embodiment can be referred to as required.

The tank 184 can store the humidification water. The tank 184 is provided in the middle of the pipe 183 and is provided between the humidification water supply device 181 and the flow rate controller 187. The temperature of the humidification water in the tank 184 is controlled by the temperature controller 182. The temperature controller 182 may have an electric heater and a thermometer. Examples of the electric heater include a sheathed heater provided inside the tank 184 and a jacket heater wound around the outer surface of the tank 184. The jacket heater can reduce the elution of impurities. The jacket heater has, for example, a heating element and a heat insulator such as a glass cloth covering the outer periphery of the heating element.

The ion exchange device 185 is provided in the middle of the pipe 186. The pipe 186 connects a not-illustrated make-up water supply source and the tank 184. The pipe 186 can be formed using, for example, a stainless steel material such as SUS304 or SUS316.

The ion exchange device 185 can remove impurities in make-up water flowing from the make-up water supply source through the pipe 186 to supply the resultant make-up water to the tank 184. The make-up water is supplied to the tank 184 and contains, for example, the same components as those in the humidification water. Examples of the impurities include iron and silica (silicon dioxide). The ion exchange device 185 has an ion exchange resin capable of removing ionic substances. Examples of the make-up water supply source include a tap water source. The make-up water supply source may have another tank to store the make-up water and supply the make-up water to the tank 184 from the other tank using gravity. Preferably, the make-up water supply source does not supply the make-up water in the case where the pressure is extremely lower than that of the humidified gas flowing in the hollow-fiber membrane 180. In the case where the pressure is too high, the hollow-fiber membrane 180 may break.

The flow rate controller 187 connects the hollow-fiber membrane 180 and the tank 184. The flow rate controller 187 can control the flow rate of the humidification water discharged from the outlet on the outer side of the hollow-fiber membrane 180 to the ion exchange device 189. The flow rate controller 187 has, for example, an orifice.

The pipe 188 is connected in parallel to the flow rate controller 187 and connects the hollow-fiber membrane 180 and the tank 184. The pipe 188 can bypass the flow rate controller 187. The pipe 188 can be formed using, for example, a stainless steel material such as SUS304 or SUS316.

The ion exchange device 189 is provided in the middle of the pipe 188. The ion exchange device 189 can remove impurities in the humidification water flowing in the pipe 188. Examples of the impurities include iron and silica (silicon dioxide).

In the electrolysis system 1 of the fourth embodiment, it is possible to supply the make-up water to the tank 184 after purifying it by the ion exchange device 185, for instance. The humidification water supply device 181 supplies the humidification water from the tank 184, the humidification water passes through the hollow-fiber membrane 180 and thereafter partly flows to the flow rate controller 187 and returns to the tank 184, and its remaining part flows in the pipe 188, is purified by the ion exchange device 189, and thereafter returns to the tank 184.

In the electrolysis system 1 of the fourth embodiment, storing the make-up water purified by the ion exchange device 185 in the tank 184 facilitates regulating the temperature of the humidification water by the temperature controller 182. For example, in the case where the temperature controller 182 is stopped or its output is reduced in the power-off period, the temperature of the humidification water decreases, but reactivating the humidification water supply device 181 after the temperature of only the humidification water in the tank 184 is increased to a desired temperature makes it possible to supply the humidification water having the desired temperature to the hollow-fiber membrane 180.

In the case where the humidifying device 108 has the tank 184, impurities accumulate inside the tank 184, but providing the ion exchange device 189 makes it possible to purify the humidification water by the ion exchange device 189, and in the case where the gas is humidified through the hollow-fiber membrane 180, not only the deterioration of the electrolysis cell 101 but also the impurity-originated deterioration of the hollow-fiber membrane 180 can be reduced. The humidification water is supplied to the hollow-fiber membrane 180, and the downstream of the hollow-fiber membrane 180 is branched so that the humidification water is partly supplied to the tank 184 through the ion exchange device 189 and its other part is supplied directly to the tank 184. Accordingly, the humidification water is not entirely supplied to the ion exchange device 189. Therefore, the ion exchange device 189 can have a longer life, can be compact, and needs to be changed at a lower frequency, achieving a cost reduction.

Moreover, the purified make-up water can make up for the humidification water whose amount has been reduced due to its use for humidifying the gas in the hollow-fiber membrane 180. Since the tank 184 is provided downstream of the hollow-fiber membrane 180 to store the humidification water which has passed in the hollow-fiber membrane 180, eluted impurities in the make-up water supply source, the hollow-fiber membrane 180, and the humidification water supply device 181 tend to accumulate in the humidification water in the tank 184. On the other hand, in the fourth embodiment, the humidification water having passed through the hollow-fiber membrane 180 is partly purified by the ion exchange device 189, making it possible to reduce the accumulation of the impurities in the humidification water in the tank 184.

### (Fifth Embodiment)

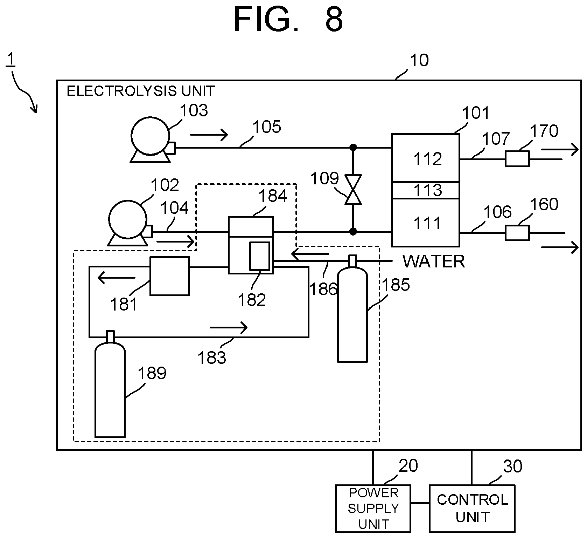

FIG. 8 is a schematic diagram illustrating a configuration example of an electrolytic system 1 of a fifth embodiment. The electrolysis system 1 of the fifth embodiment is different from the electrolysis system 1 of the third embodiment in that the humidifying device 108 further has a tank 184, an ion exchange device 185, a pipe 186, and an ion exchange device 189 and does not have the hollow-fiber membrane 180. The following describes parts different from the third embodiment, and for the other parts, the description in the third embodiment can be referred to as required.

The tank 184 can store the humidification water. The tank 184 is provided in the middle of the pipe 104 and in the middle of the pipe 183. The temperature of the humidification water in the tank 184 is controlled by the temperature controller 182. For the other description of the temperature controller 182, the description in the fourth embodiment can be referred to as required.

The ion exchange device 185 is provided in the middle of the pipe 186. The pipe 186 connects a not-illustrated make-up water supply source and the tank 184. The ion exchange device 185 can remove impurities in water flowing from the make-up water supply source through the pipe 186 to supply the resultant water to the tank 184. Examples of the impurities include iron and silica (silicon dioxide). The ion exchange device 185 has an ion exchange resin capable of removing ionic substances. Examples of the make-up water supply source include a tap water source. The make-up water supply source may have another tank to store the make-up water and supply the make-up water from the other tank to the tank 184 using gravity.

The ion exchange device 189 is provided in the middle of the pipe 183. The ion exchange device 189 can remove impurities in the humidification water flowing in the pipe 183. Examples of the impurities include iron and silica (silicon dioxide).

In the fifth embodiment, the gas is passed in the humidification water in the tank 184 to cause bubbling, thereby generating the humidified gas. The humidification water flows from the humidification water supply device 181 to the ion exchange device 189 via the tank 184.

The purified make-up water can make up for the humidification water whose amount has been reduced due to its use for humidifying the gas in the tank 184. The eluted impurities in the make-up water supply source and the humidification water supply device 181 are likely to accumulate in the humidification water in the tank 184. On the other hand, in the fifth embodiment, the humidification water is partly purified by the ion exchange device 189, making it possible to reduce the accumulation of the impurities in the humidification water in the tank 184.

The hollow-fiber membrane 180 costs a lot because it deteriorates due to impurities and so on and needs to be changed at a frequency such as once a year. The bubbling type as in the fifth embodiment does not require maintenance. Further, supplying the make-up water to the tank 184 via the ion exchange device 185 enables the removal of the impurities in the make-up water.

The first embodiment to the fifth embodiment may be combined as necessary.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An electrolysis system comprising:
an electrolysis unit comprising:
an electrolysis cell having a cathode, an anode, and a diaphragm between the cathode and the anode;
a gas supply device configured to supply a gas containing carbon dioxide;
an electrolytic solution supply device configured to supply an electrolytic solution; and
a humidifying device configured to humidify the gas from the gas supply device to form a humidified gas;
a power supply unit configured to control energizing each of the electrolysis cell, the gas supply device, the electrolytic solution supply device, and the humidifying device; and
a control unit configured to control the electrolysis unit and the power supply unit,
wherein the control unit is configured to control switching between:
a power-on period in which starting to energize the electrolysis cell, supplying the electrolytic solution to the anode, and supplying the humidified gas to the cathode; and
a power-off period in which stopping to energize the electrolysis cell but supplying the humidified gas to the cathode or to the cathode and the anode, and
wherein the humidifying device is controlled so that an absolute humidity of the humidified gas in the power-off period is lower than an absolute humidity of the humidified gas in the power-on period.

2. The electrolysis system according to claim 1,
wherein the electrolysis unit further comprises:
a first pipe connecting the gas supply device and an inlet of the cathode;
a second pipe connecting the electrolytic solution supply device and an inlet of the anode; and
a connection valve configured to control connecting the first pipe and the second pipe, and
wherein in the power-off period, the electrolytic system is configured to stop energizing the electrolytic cell, stop supplying the electrolytic solution from the electrolytic solution supply device, connecting the first pipe and the second pipe via the connection valve, and supplying the humidified gas to the cathode via the first pipe and to the anode through via the second pipe.

3. The electrolysis system according to claim 1,
wherein the electrolysis unit further comprises:
a first pipe connecting the gas supply device and an inlet of the cathode;
a second pipe connecting the electrolytic solution supply device and an inlet of the anode; and
a connection valve configured to control connecting the first pipe and the second pipe, and
wherein the humidifying device includes:
a hollow-fiber membrane having an inner side through which the gas passes and an outer side through which a humidification water for humidifying the gas flows;
a humidification water supply device configured to supply the humidification water to the outer side; and
a temperature controller configured to control a temperature of the humidification water, and
wherein in the power-off period, the electrolysis system is configured to stop energizing the electrolysis cell and disconnecting the first pipe and the second pipe by the disconnection valve, but supply the electrolytic solution to the anode and supply the humidified gas to the cathode, and
wherein in the power-off period, the temperature controller is controlled so that the temperature of the humidification water is gradually decreased.

4. The electrolysis system according to claim 1,
wherein the electrolysis unit further comprises:
a first pipe connecting the gas supply device and an inlet of the cathode;
a second pipe connecting the electrolytic solution supply device and an inlet of the anode;
a connection valve configured to control connecting the first pipe and the second pipe; and
at least one thermometer selected from the group consisting of a first thermometer and a second thermometer, the first thermometer being connected to an outlet of the cathode and being configured to measure a temperature of a first fluid discharged from the outlet of the cathode, and the second thermometer being connected to an outlet of the anode and being configured to measure a temperature of a second fluid discharged from the outlet of the anode,
wherein the humidifying device comprises:
a hollow-fiber membrane having an inner side through which the gas passes and an outer side through which a humidification water for humidifying the gas flows;
a humidification water supply device configured to supply the humidification water to the outer side; and
a temperature controller configured to control a temperature of the humidification water, and
wherein, in the power-off period, the temperature controller is controlled so that the temperature of the humidification water is higher than at least one temperature measured by the at least one thermometer.

5. The electrolysis system according to claim 1,
wherein the humidifying device includes:
a hollow-fiber membrane having an inner side through which the gas passes and an outer side through which a humidification water for humidifying the gas flows;
a humidification water supply device configured to supply the humidification water to an inlet on the outer side;
a tank configured to store the humidification water discharged from an outlet on the outer side;
a temperature controller configured to control a temperature of the humidification water in the tank;
a first ion exchange device configured to purify a make-up water to be supplied to the tank;
a third pipe connecting the outlet on the outer side and the tank;
a flow rate controller connected in parallel to the third pipe and configured to control a flow rate of the humidification water discharged from the outlet on the outer side to the tank; and
a second ion exchange device provided in the middle of the third pipe and configured to purify the humidification water discharged from the outlet on the outer side.

6. The electrolysis system according to claim 1,
wherein the humidifying device comprises:
a tank configured to store a humidification water for humidifying the gas from the gas supply device by bubbling;
a temperature controller configured to control a temperature of the humidification water in the tank;
a humidification water supply device configured to supply the humidification water to the tank;
a first ion exchange device configured to purify a make-up water to be supplied to the tank; and
a second ion exchange device configured to purify the humidification water to be supplied from the humidification water supply device.
